# EUROPEAN PATENT SPECIFICATION

(11) **EP 3 085 245 B1**
(45) Date of publication and mention of the grant of the patent: **05.12.2018**
(21) Application number: 15175966.9
(22) Date of filing: 08.07.2015
(51) Int. Cl.: A23L 3/375, F17C 7/00, F25D 3/10

(54) **APPARATUS AND METHOD FOR REDUCING THE TEMPERATURE OF LIQUID PRODUCTS**
VORRICHTUNG UND VERFAHREN ZUR VERRINGERUNG DER TEMPERATUR EINES FLÜSSIGEN PRODUKTS
APPAREIL ET PROCÉDÉ PERMETTANT DE RÉDUIRE LA TEMPÉRATURE DE PRODUITS LIQUIDES

(30) Priority: 24.04.2015 US 201562152226 P
(43) Date of publication of application: 26.10.2016
(73) Proprietor: Linde Aktiengesellschaft, 80331 München (DE)
(72) Inventor: Madsen, Scott Thomas, Burr Ridge, IL 60527 (US); Lilakos, Louis, Oakville, Ontario L6H 5T1 (CA)
(74) Representative: Gellner, Bernd

(56) References cited:
- WO-A1-2005/053440
- US-A- 3 214 928
- US-A1- 2005 132 721
- US-A1- 2006 283 195
- US-A1- 2011 296 853
- US-A1- 2011 305 102

## Description

### Technical field of the present invention

The present invention relates to an apparatus as well as to a method for mixing and chilling liquid products, in particular flowable food products, for example edible substances selected from the group consisting of sauces, marinades, soups, dairy and other heated or pasteurized products.

### Technological background of the present invention

Liquid food products are frequently heated for their production and/or sterilization prior to consumption or subsequent processing for consumption. During such processing, the liquid food product is cooled for storage or for use with other food products during the processing thereof. The cooling may occur directly or indirectly through heat exchangers with the use of cryogen or other chilling substances.

However, known apparatus and systems to mix and chill liquid food products do not do so in a uniformly rapid manner that for commercial operators is necessary in order to meet production quotas, reduce bacteria growth, and comply with other requirements and regulations.

In addition, these apparatus and systems suffer from "knocking" or "hammering", due to systemic pipe pressures caused by icing or freezing of the liquids to inner walls of system piping which reduces the internal diameter of the piping and causes the knocking, etc. The metallic materials used in the construction of such known apparatus and systems are exposed to such icing/freezing conditions which also contributes to the knocking, etc.

US 2006/0283195 A1 discloses a system for cooling a pumpable material comprising an inline continuous mechanical mixer having a feed inlet, a liquid cryogen inlet, and a cooled product outlet; a cryogenic liquid delivery and injection system adapted to introduce a liquid cryogen into the liquid cryogen inlet; and a feed pump adapted to introduce the pumpable material into the feed inlet. The pumpable material may include prepared foods. The inline continuous mechanical mixer is defined as a vessel having an inlet and an outlet wherein one or more mechanical mixing devices are disposed within the mixing vessel between the inlet and outlet and are adapted to mix the pumpable material as it passes through the vessel. A mechanical mixing device is a rotating or moving element that promotes physical mechanical mixing of the pumpable material as it moves through the vessel. Rotating or moving elements may include, for example, paddles, pins, scrapers, propellers, turbines, or other devices that shear the pumpable material to cause mixing. Exemplary types of inline continuous mechanical mixers may include, for example, an axial-flow tubular vessel having a coaxial shaft that passes through the vessel and is fitted with shear-inducing elements such as radial paddles, pins, or scrapers. The shaft is rotated to induce mixing of the pumpable material as it flows through the tubular vessel.

US 2011/0305102 A1 discloses a fluid mixing assembly which is based on a main tube feed with a plurality of injection tubes disposed about the main tube and projection through a side wall of the main tube, each injection tube having an exit into the interior of the main tube. The mixing assembly of US 2011/0305102 A1 comprises flanges at each end of the main tube to mount it in a processing line.

### Reference can also be made

- to US 3,214,928 disclosing an apparatus for reducing the temperature of food products, or
- to US 2005/0132721 A1 disclosing a pipe system for accelerated cooling of a liquid.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by an apparatus comprising the features of claim 1 as well as by a method comprising the features of claim 10. Advantageous embodiments and expedient improvements of the present invention are disclosed in the respective dependent claims.

The present disclosure basically provides for an apparatus, in particular for an inline mixing injector apparatus, for reducing the temperature of a liquid product, in particular of a flowable food product, in a processing line, which includes:
- a housing or member having a passage(way) formed therein for receiving a liquid product in the passage(way);
- an inlet and an outlet each in fluid communication with a corresponding opposed end of the passage(way);
- a plurality of delivery channels formed in the housing or member, each one of the plurality of delivery channels having an opening in fluid communication with a different location of the passage(way) and constructed to provide a chilling medium into the passage(way); and
- a support member for the housing or member, the support member constructed to mount said housing or member in the processing line.

According to an advantageous embodiment of the present invention, the housing or member may comprise a slug of material selected from the group consisting of polytetrafluoroethylene (PTFE), ultra high molecular weight (UHMW) plastic, and other plastic material.

The housing or member may expediently appear as a polymer slug comprising a circular cross-section, especially a cylindrical shape, although other shapes for the housing or member may be employed.

The passage(way) extending through the slug may favourably comprise
- a continuous uniform diameter, in particular being concentric with the cylindrical shape of the slug, or
- a diameter increasing from said inlet to said outlet.

In the present invention, the plurality of openings comprise a staggered or helical pattern along the passage(way) for delivering the chilling medium, in particular to impart the twisting, rotational or cyclonic aspect of the chilling medium as it is introduced into the liquid product transiting the passage(way).

Advantageously, each of the plurality of channels are disposed at an angle less than ninety degrees with respect to a longitudinal axis of the passage(way), i.e. with respect to the flow of the liquid product passing through the passage(way). Although the channels can be oriented transverse to the longitudinal axis of the passage(way), such orientation may be altered to facilitate introduction and mixing of the chilling medium with the liquid product transiting the passage(way).

In this context or independently thereof, the angle of each of the plurality of channels may approach a direction of flow of the chilling medium in the passage(way).

According to an expedient embodiment of the present invention, at least one nozzle delivers the chilling medium into the channel, said nozzle especially being in fluid communication with a plurality of apertures of the delivery channels, in particular opposite to the opening.

The housing or member may favourably be cradled in a support member, in particular in a frame, said frame
- preferably being constructed from metallic components, and/or
- preferably being releasably engageable to the housing or member.

In particular, the frame may be removably mounted between a pair of brackets, and a pair of bolts extend through each one of the brackets and through a corresponding bore through the housing or member to be retained in position by mechanical fasteners mounted at opposed ends of the corresponding one of the bolts.

There is also provided herein a method for reducing the temperature of a liquid product, in particular of a flowable food product, in a processing line, the method including:
- introducing the liquid product through a passage(way) of a housing or member for chilling said liquid product in said passage(way);
- providing into the passage(way) a plurality of streams of a chilling medium at different locations of the passage(way), in particular comprising pressurizing said providing; and
- mounting, in particular removably mounting, the housing or member in the processing line.

According to an advantageous embodiment of the present invention, the liquid product may comprise an edible substance selected from the group consisting of sauces, marinades, soups, dairy and other liquid food products.

According to the present invention, the providing comprises injecting the plurality of streams of the chilling medium into the passage(way) along a staggered or helical path in the passage(way) so as to create vortices in the chilling medium for facilitating mixing of the chilling medium into the liquid product passing through the passage(way), resulting in a more uniform chilling.

In a favoured embodiment of the present invention, the chilling medium may comprise a cryogenic substance selected from the group consisting of liquid nitrogen, gaseous nitrogen, a combination of liquid and gaseous nitrogen, liquid carbon dioxide, gaseous carbon dioxide, and a combination of liquid and gaseous carbon dioxide.

The chilling, i.e. the arrival at the desired reduced temperature occurs rapidly, and may preferably be accomplished during a single moving or a single pass of the liquid product through the passage(way).

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 10; further improvements, features and advantages of the present invention are explained below in more detail with reference to particular and preferred embodiments by way of non-limiting example and to the appended drawing figures taken in conjunction with the following description of the embodiments, of which:
- FIG. 1: shows a first embodiment of the apparatus according to the present invention, said embodiment working according to the method of the present invention;
- FIG. 2: is a view of the apparatus taken along line 2-2 in FIG. 1;
- FIG. 3: shows another embodiment of the apparatus according to the present invention, said embodiment working according to the method of the present invention;
- FIG. 4: shows a view of the apparatus taken along line 4-4 in FIG. 3;
- FIG. 5: shows still another embodiment of the apparatus according to the present invention, said embodiment working according to the method of the present invention; and
- FIG. 6: shows a view of the apparatus taken along line 5-5 in FIG. 6.

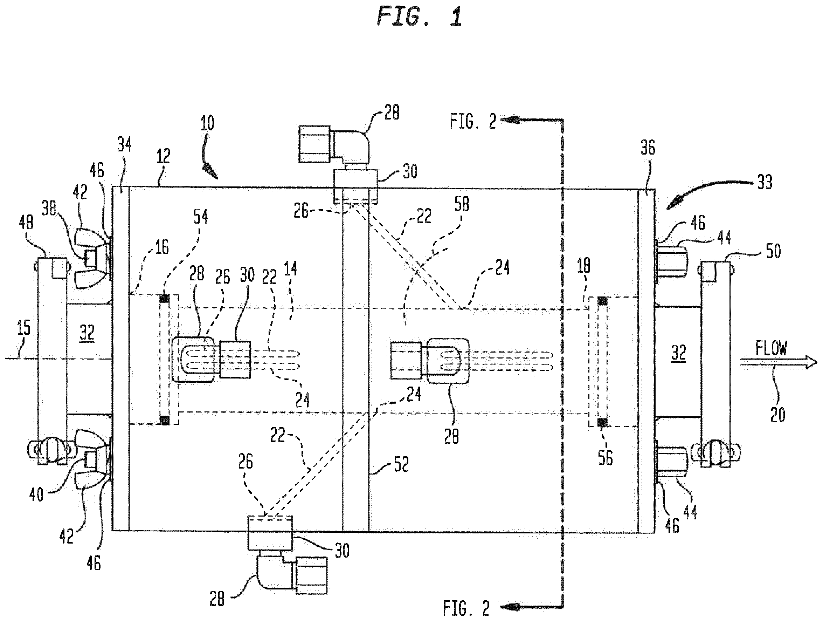

In the appended drawing figures, like equipment is labelled with the same reference numerals throughout the description of FIG. 1 to FIG. 6.

### Detailed description of the drawings; best way of embodying the present invention

Before explaining the inventive embodiments in detail, it is to be understood that the present invention is not limited in its application to the details of construction and arrangement of parts illustrated in the accompanying drawings, if any, since the present invention is capable of other embodiments and being practiced or carried out in various ways. Also it is to be understood that the phraseology or terminology employed herein is for the purpose of description and not of limitation.

The embodiments shown in FIG. 1 to FIG. 6 improve the rate for chilling sauces, soups, marinades, dairy and other hot liquid products, such as for example liquid food products. The chilling occurs rapidly, and is accomplished during a single pass through the embodiments presented to arrive at the desired reduced temperature. Upon being exhausted from outlets of the embodiments described below the liquid food product is substantially and uniformly cooled.

All of the embodiments, unless otherwise indicated, are constructed of a polymer or related material of polytetrafluoroethylene (PTFE), ultra high molecular weight (UHMW) plastic or other type of plastic material, which provides for improved operating characteristics as will be discussed hereinbelow.

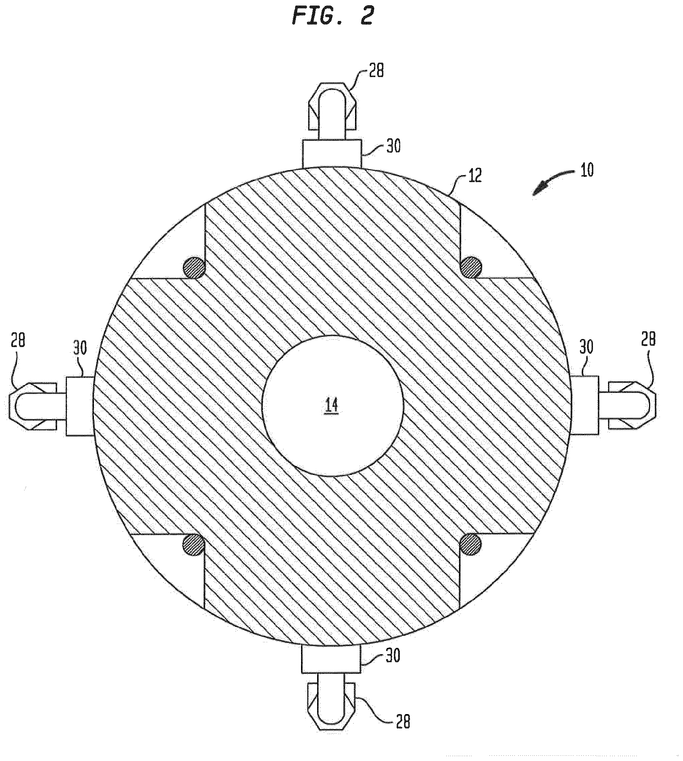

Referring to FIG. 1 and FIG. 2, an apparatus embodiment of the present invention is shown generally at 10 which includes a housing or slug 12 of material selected from the group consisting of UHMW plastic, polyethylene, other polymers, polytetrafluoroethylene (PTFE), and other plastic-type materials. The housing 12 may appear as a plastic cylindrical slug ("slug"), although other shapes for the housing may be employed.

A passage 14 or passageway extends through the slug 12 from an inlet 16 to an outlet 18, the inlet 16 and outlet 18 being in fluid communication with the passage 14. As shown in FIG. 1, the passage 14 may be disposed along a central longitudinal axis 15 of the slug 12 by way of example only. It is understood that the disposition of the passage 14 within the slug 12 may be in alternate orientations.

The passage 14 as shown in FIG. 1 and FIG. 2 has a uniform diameter consistent throughout its length and position within the slug 12. The diameter may be consistent with a width of from 5.1 cm to 11.4 cm (two inches to 4.5 inches), depending upon the type and volume of liquid product transiting the passage 14 for being chilled. As shown in FIG. 1, arrow 20 indicates a flow of the liquid product through and from the passage 14 for chilling and subsequent processing or use.

The slug 12 is also formed with a plurality of channels 22 or ducts, each of such channels 22 formed in the slug 12 and opening for fluid communication with the passage 14. The channels 22 may be formed by drilling through the slug 12. The diameter of each channel 22 can be 0.32 cm (1/8 inch), by way of example only.

Referring to FIG. 1, each of the channels 22 has an aperture 24 opening into the passage 14. At an end of each of the channels 22 opposite to the aperture 24 there is provided an opening 26 in fluid communication with a corresponding nozzle 28 which delivers a chilling medium into the channel 22.

Each one of the nozzles 28 is mounted in releasable engagement to a corresponding collar 30 with the collar 30 forming a fluid tight seal between the nozzle 28 and a corresponding one of the openings 26 of channels 22. Another embodiment calls for each nozzle 28 being in fluid communication with a plurality of channels 22, as will be described herein below.

As shown in FIG. 1, each of the channels 22 is arranged at an angle with respect to the flow 20 of the liquid product passing through the passage 14. That is, although the channels 22 can be oriented transverse to the longitudinal axis 15 of the passage 14, such orientation may be altered to facilitate introduction and mixing of the chilling medium with the liquid product transiting the passage 14.

For example, each of the channels 22 may be arranged at an angle 58 of approximately thirty degrees to fifty degrees with respect to the passage 14, such that the aperture 24 of each of the channels 22 opens into the passage 14 at different positions along same.

Introduction of the chilling medium through the channels 22 in such a manner imparts a rotational aspect of the chilling medium being introduced into the liquid product to facilitate uniform cooling of the liquid product and mixing of the chilling medium into same.

The result is that the flow 20 exiting the outlet 18 of the passage 14 is more uniformly mixed and chilled, thereby substantially reducing if not eliminating pockets of the liquid product having different temperatures upon being exhausted from the slug 12.

It is also shown in FIG. 1 that the apertures 24 are arranged with respect to the passage 14 to describe a staggered or helical pattern to impart the twisting, rotational or cyclonic aspect of the chilling medium as it is introduced into the liquid product transiting the passage 14.

It is also possible that the introduction of the chilling medium through the channels 22 is provided under pressure, thereby causing the chilling medium upon leaving the corresponding aperture 24 to be injected further into the liquid product in the passage 14 and to create vortices in the chilling medium to facilitate mixing of same in the liquid product which facilitates a more uniform chilling of same.

The chilling medium can be liquid or gaseous nitrogen, or liquid or gaseous carbon dioxide.

The housing 12 or slug can be retrofit, i. e. inserted into an existing liquid product line 32 as follows. The slug 12 can be cradled in a frame 33 and is removably mounted between a pair of brackets 34, 36, and a pair of bolts 38, 40 extend through each one of the brackets 34, 36 as shown and through a corresponding bore (not shown) through the slug 12 to be retained in position by mechanical fasteners 42, 44 mounted at opposed ends of the corresponding one of the bolts 38, 40.

The mechanical fastener 42 may be a wingnut or butterfly nut, while the mechanical fastener 44 may be a nut. Washers 46 can be disposed on each of the bolts 38, 40 between the mechanical fasteners 42, 44 and the brackets 34, 36 to securely position the slug 12 within the brackets 34, 36 and in orientation with respect to the existing product line 32.

Tri-clamp flanges 48, 50 of the existing product line 32 provide for quick-release engagement of the apparatus 10 with respect to said existing product line 32.

A metal band 52 or strap, also part of the frame 33, is shown releasably securing one of the collars 30 (which is connected to a corresponding one of the nozzles 28) to the slug 12. For the sake of clarity in this FIG. 1, only one of the bands 52 is shown. It is understood however that the other collars 30 are also releasably secured to the slug 12 with a corresponding band or strap 52.

In contrast to the composition of materials of the apparatus 10, the nozzle 28 and all the features through to the metal band 52 are constructed of stainless steel.

Seals 54, 56 or gaskets, such as for example o-rings, are disposed at a position where the existing product line 32 is joined to the inlet 16 and outlet 18 of the passage 14 in the slug 12. The seals 54, 56 prevent liquid product flow through the passage 14 from seaping out of the interface or connection where the steel product line 32 contacts the plastic slug 12 to be in registration therewith.

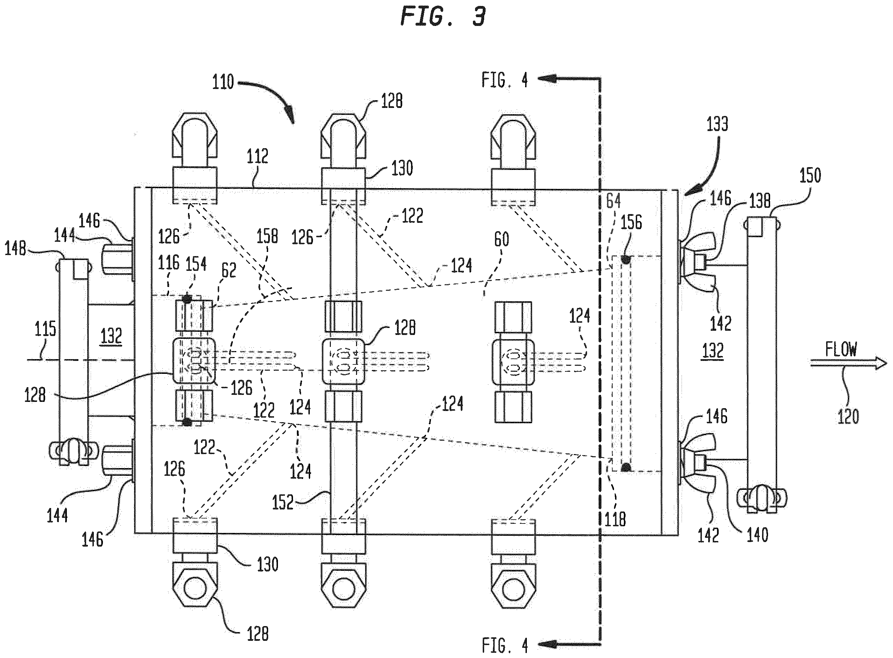

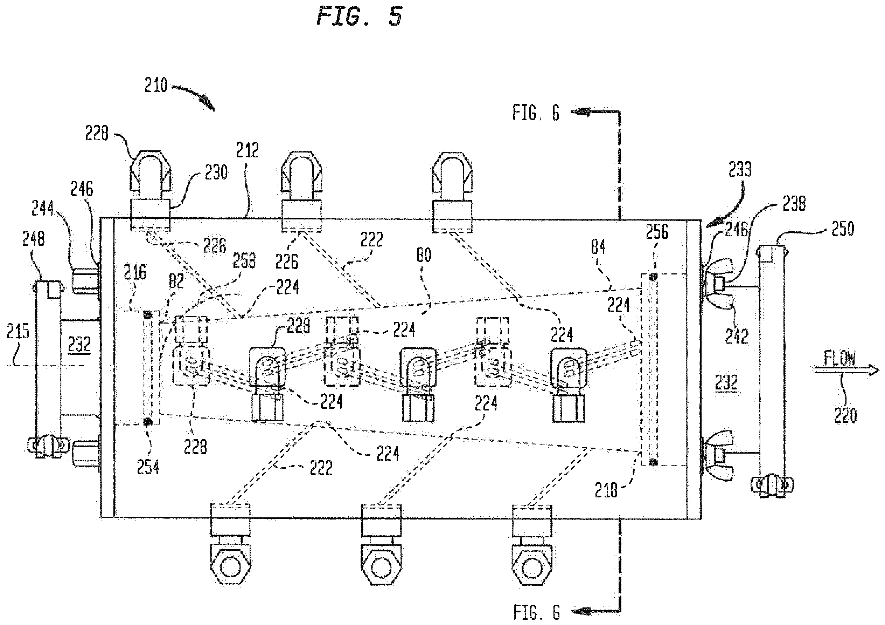

Two other exemplary embodiments of the inline mixing injector for liquid products in accordance with the present invention are illustrated in FIG. 3 to FIG. 4 and in FIG. 5 to FIG. 6, respectively. The elements and methods illustrated in FIG. 3 to FIG. 4 and in FIG. 5 to FIG. 6 correspond to the elements and methods described above with respect to FIG. 1 to FIG. 2, and have further been designated by corresponding reference numerals increased by 100 and 200, respectively. The embodiments of FIG. 3 to FIG. 4 and of FIG. 5 to FIG. 6 are designed for use in the same manner as the FIG. 1 to FIG. 2, unless otherwise stated.

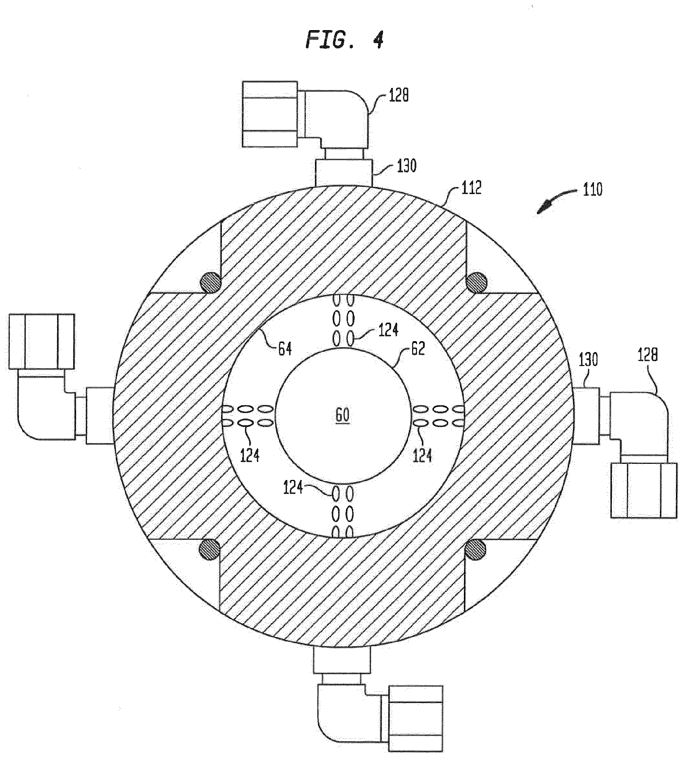

Referring to FIG. 3 and FIG. 4, an apparatus embodiment of the present invention is shown generally at 110 which includes a housing or slug 112 of material selected from the group consisting of UHMW plastic, polyethylene, other polymers, polytetrafluoroethylene (PTFE), and other plastic-type materials. The housing 112 may appear as a plastic cylindrical slug ("slug"), although other shapes for the housing may be employed.

A passage 60 extends through the slug 112 from an inlet 116 to an outlet 118, the inlet 116 and outlet 118 being in fluid communication with the passage. As shown in FIG. 3, the passage 60 may be disposed along a central longitudinal axis 115 of the slug 112 by way of example only. It is understood that the disposition of the passage 60 within the slug 112 may be in alternate orientations.

The passage 60 as shown in FIG. 3 and FIG. 4 has a continually increasing diameter in its position within the slug 112. The diameter may be from 5.1 cm (two inches) beginning at a region 62 near the inlet 116 and increasing to 11.4 cm (4.5 inches) at a region 64 near the outlet 118, depending upon the type and volume of liquid product transiting the passage 60 for being chilled.

FIG. 4 shows the expanding cone shaped diameter of the passage 60 in the slug 112. The passage 60 has a diameter that increases from proximate the inlet 116 to its greatest diameter at the outlet 118. As shown in FIG. 3, arrow 120 indicates a flow of the liquid product through and from the passage 60 for chilling and subsequent processing or use.

The slug 112 is also formed with a plurality of channels 122 or ducts, each of such channels 122 formed in the slug 112 and opening for fluid communication with the passage 60. The channels 122 may be formed by drilling through the slug 112. The diameter of each channel 122 can be 0.32 cm (1/8 inch), by way of example only.

Referring to FIG. 3, each of the channels 122 has an aperture 124 opening into the passage 60. At an end of each of the channels 122 opposite to the aperture 124 there is provided an opening 126 in fluid communication with a corresponding nozzle 128 which delivers a chilling medium into the channel 122.

Each one of the nozzles 128 is mounted in releasable engagement to a corresponding collar 130 with the collar 130 forming a fluid tight seal between the nozzle 128 and a corresponding one of the openings 126 of the channels 122. Another embodiment calls for each nozzle 128 being in fluid communication with a plurality of channels 122, as will be described herein below.

As shown in FIG. 3, each of the channels 122 is arranged at an angle with respect to the flow 120 of the liquid product passing through the passage 60. That is, although the channels 122 can be oriented transverse to the longitudinal axis 115 of the passage 60, such orientation may be altered to facilitate introduction and mixing of the chilling medium with the liquid product transiting the passage 60.

For example, each of the channels 122 may be arranged at an angle 158 of approximately thirty degrees to fifty degrees with respect to the longitudinal axis 115 of the passage 60, such that the aperture 124 of each of the channels 122 opens into the passage 60 at different positions along same.

Introduction of the chilling medium through the channels 122 in such a manner imparts a rotational aspect of the chilling medium being introduced into the liquid product to facilitate uniform cooling of the liquid product and mixing of the chilling medium into same.

The result is that the flow 120 exiting the outlet 118 of the passage 60 is more uniformly mixed and chilled, thereby substantially reducing if not eliminating pockets of the liquid product having different temperatures upon being exhausted from the slug 112.

It is also shown in FIG. 3 that the apertures 124 are arranged with respect to the passage 60 to describe a staggered or helical pattern to impart the twisting, rotational or cyclonic aspect of the chilling medium as it is introduced into the liquid product transiting the passage 60.

It is also possible that the introduction of the chilling medium through the channels 122 is provided under pressure, thereby causing the chilling medium upon leaving the corresponding aperture 124 to be injected further into the liquid product in the passage 60 and to create vortices in the chilling medium to facilitate mixing of same in the liquid product which facilitates a more uniform chilling of same.

The chilling medium can be liquid or gaseous nitrogen, or liquid or gaseous carbon dioxide.

The housing 112 or slug can be retrofit, i. e. inserted into an existing liquid product line 132 as follows. The slug 112 can be cradled in a frame 133 and is removably mounted between a pair of brackets 134, 136, and a pair of bolts 138, 140 extend through each one of the brackets 134, 136 as shown and through a corresponding bore (not shown) through the slug 112 to be retained in position by mechanical fasteners 142, 144 mounted at opposed ends of the corresponding one of the bolts 138, 140.

The mechanical fastener 142 may be a wingnut or butterfly nut, while the mechanical fastener 144 may be a nut. Washers 146 can be disposed on each of the bolts 138, 140 between the mechanical fasteners 142, 144 and the brackets 134, 136 to securely position the slug 112 within the brackets 134, 136 and in orientation with respect to the existing product line 132.

Tri-clamp flanges 148, 150 of the existing product line 132 provide for quick-release engagement of the apparatus 110 with respect to said existing product line 132.

A metal band 152 or strap, also part of the frame 133, is shown releasably securing one of the collars 130 (which is connected to a corresponding one of the nozzles 128) to the slug 112. For the sake of clarity in this FIG. 3, only one of the bands 152 is shown. It is understood however that the other collars 130 are also releasably secured to the slug 112 with a corresponding band or strap 152.

In contrast to the composition of materials of the apparatus 110, the nozzle 128 and all the features through to the metal band 152 are constructed of stainless steel.

Seals 154, 156 or gaskets, such as for example o-rings, are disposed at a position where the existing product line 132 is joined to the inlet 116 and outlet 118 of the passage 60 in the slug 112. The seals 154, 156 prevent liquid product flow through the passage 60 from seaping out of the interface or connection where the steel product line 132 contacts the plastic slug 112 to be in registration therewith.

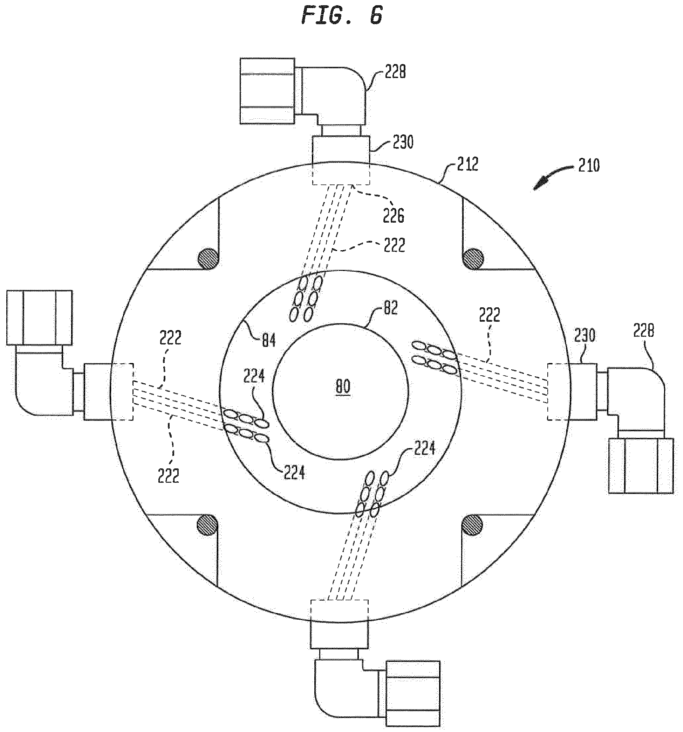

Referring to FIG. 5 and FIG. 6, an apparatus embodiment of the present invention is shown generally at 210 which includes a housing or slug 212 of material selected from the group consisting of UHMW plastic, polyethylene, other polymers, polytetrafluoroethylene (PTFE), and other plastic-type materials. The housing 212 may appear as a plastic cylindrical slug ("slug"), although other shapes for the housing may be employed.

A passage 80 extends through the slug 212 from an inlet 216 to an outlet 218, the inlet 216 and outlet 218 being in fluid communication with the passage 80. As shown in FIG. 5, the passage 80 may be disposed along a central longitudinal axis 215 of the slug 212 by way of example only. It is understood that the disposition of the passage 80 within the slug 212 may be in alternate orientations.

The passage 80 as shown in FIG. 5 and FIG. 6 has a continually increasing diameter in its position within the slug 212. The diameter may be from 5.1 cm (two inches) beginning at a region 82 near the inlet 216 and increasing to 11.4 cm (4.5 inches) at a region 84 near the outlet 218, depending upon the type and volume of liquid product transiting the passage 80 for being chilled.

FIG. 6 shows the expanding cone shaped diameter of the passage 80 in the slug 212. The passage 80 has a diameter that increases from proximate the inlet 216 to its greatest diameter at the outlet 218. As shown in FIG. 5, arrow 220 indicates a flow of the liquid product through and from the passage 80 for chilling and subsequent processing or use.

The slug 212 is also formed with a plurality of channels 222 or ducts, each of such channels 222 formed in the slug 212 and opening for fluid communication with the passage 80. The channels 222 may be formed by drilling through the slug 212. The diameter of each channel 222 can be 0.32 cm (1/8 inch), by way of example only.

Referring to FIG. 5, each of the channels 222 has an aperture 224 opening into the passage 80. At an end of each of the channels 222 opposite to the aperture 224 there is provided an opening 226 in fluid communication with a corresponding nozzle 228 which delivers a chilling medium into the channel 222.

Each one of the nozzles 228 is mounted in releasable engagement to a corresponding collar 230 with the collar 230 forming a fluid tight seal between the nozzle 228 and a corresponding one of the openings 226 of the channels 222. Another embodiment calls for each nozzle 228 being in fluid communication with a plurality of channels 222, as will be described herein below.

As shown in FIG. 5, each of the channels 222 is arranged at an angle with respect to the flow 220 of the liquid product passing through the passage 80. That is, although the channels 222 can be oriented transverse to the longitudinal axis 215 of the passage 80, such orientation may be altered to facilitate introduction and mixing of the chilling medium with the liquid product transiting the passage 80.

For example, each of the channels 222 may be arranged at an angle 258 of approximately thirty degrees to fifty degrees with respect to the longitudinal axis 215 of the passage 80, such that the aperture 224 of each of the channels 222 opens into the passage 80 at different positions along same.

Introduction of the chilling medium through the channels 222 in such a manner imparts a rotational aspect of the chilling medium being introduced into the liquid product to facilitate uniform cooling of the liquid product and mixing of the chilling medium into same.

The result is that the flow 220 exiting the outlet 218 of the passage 80 is more uniformly mixed and chilled, thereby substantially reducing if not eliminating pockets of the liquid product having different temperatures upon being exhausted from the slug 212.

It is also shown in FIG. 5 that the apertures 224 are arranged with respect to the passage 80 to describe a staggered or helical pattern to impart the twisting, rotational or cyclonic aspect of the chilling medium as it is introduced into the liquid product transiting the passage 80.

It is also possible that the introduction of the chilling medium through the channels 222 is provided under pressure, thereby causing the chilling medium upon leaving the corresponding aperture 224 to be injected further into the liquid product in the passage 80 and to create vortices in the chilling medium to facilitate mixing of same in the liquid product which facilitates a more uniform chilling of same.

The chilling medium can be liquid or gaseous nitrogen, or liquid or gaseous carbon dioxide.

The housing 212 or slug can be retrofit, i. e. inserted into an existing liquid product line 232 as follows. The slug 212 can be cradled in a frame 233 and is removably mounted between a pair of brackets 234, 236, and a pair of bolts 238, 240 extend through each one of the brackets 234, 236 as shown and through a corresponding bore (not shown) through the slug 212 to be retained in position by mechanical fasteners 242, 244 mounted at opposed ends of the corresponding one of the bolts 238, 240.

The mechanical fastener 242 may be a wingnut or butterfly nut, while the mechanical fastener 244 may be a nut. Washers 246 can be disposed on each of the bolts 238, 240 between the mechanical fasteners 242, 244 and the brackets 234, 236 to securely position the slug 212 within the brackets 234, 236 and in orientation with respect to the existing product line 232.

Tri-clamp flanges 248, 250 of the existing product line 232 provide for quick-release engagement of the apparatus 210 with respect to said existing product line 232.

A metal band 252 or strap, also part of the frame 233, is shown releasably securing one of the collars 230 (which is connected to a corresponding one of the nozzles 228) to the slug 212. For the sake of clarity in this FIG. 5, only one of the bands 252 is shown. It is understood however that the other collars 230 are also releasably secured to the slug 212 with a corresponding band or strap 252.

In contrast to the composition of materials of the apparatus 210, the nozzle 228 and all the features through to the metal band 252 are constructed of stainless steel.

Seals 254, 256 or gaskets, such as for example o-rings, are disposed at a position where the existing product line 232 is joined to the inlet 216 and outlet 218 of the passage 80 in the slug 212. The seals 254, 256 prevent liquid product flow through the passage 80 from seaping out of the interface or connection where the steel product line 232 contacts the plastic slug 212 to be in registration therewith.

The present embodiments provide for a faster and more efficient chilling of the liquid food product for increase production with less contamination of same. The present embodiments also provide for greater flexibility of any processing system to which the embodiments are connected, increase productivity and flexibility with respect to high liquid products being input into the system and of course a greater range of liquid products can now be acted upon by the apparatus.

The use of plastics or polytetrafluoroethylene (PTFE) requires less maintenance, and such materials reduce the medium for bacteria growth and clogging of the embodiments with frozen food products and condensation which is known to occur with stainless steel construction.

Because of the manner by which the liquid product is mixed, product temperature consistency is improved so that the resulting pull down rate of the liquid product provides for an improved product quality while at the same time reducing product waste.

The use of polytetrafluoroethylene (PTFE), UHM, polymers or plastic in the construction of the embodiments limits the extreme cold in the system from being transmitted from an input pipeline and nozzles which correspondingly eliminates any build up of the liquids, sauces, etc. at the inner walls of the transfer line; a more uniform temperature distribution is provided to the liquid products being mixed; and the mixing action of the liquid food products eliminates sticking or adherence of same to the transfer lines.

It will be understood that the embodiments described herein are merely exemplary, and that one skilled in the art may make variations and modifications.

### List of reference numerals

- 10: apparatus, in particular inline mixing injector apparatus (first embodiment; cf. FIG. 1 and FIG. 2)
- 12: member, in particular housing or slug, for example plastic housing or plastic slug, such as polymer housing or polymer slug
- 14: passage or passageway
- 15: central and/or longitudinal axis of member 12 and/or of passage or passageway 14
- 16: inlet
- 18: outlet
- 20: direction of flow of liquid product
- 22: channel or duct, in particular delivery channel or delivery duct
- 24: aperture of channel or duct 22 into passage or passageway 14
- 26: opening of channel or duct 22 in fluid communication with nozzle 28
- 28: nozzle
- 30: collar
- 32: processing line or product line, in particular liquid product line or steel product line
- 33: frame
- 34: first bracket
- 36: second bracket
- 38: first bolt
- 40: second bolt
- 42: first mechanical fastener, in particular wingnut or butterfly nut
- 44: second mechanical fastener, in particular nut
- 46: washer
- 48: first flange, in particular first tri-clamp flange
- 50: second flange, in particular second tri-clamp flange
- 52: band or strap, in particular metal band or metal strap
- 54: first seal or first gasket, in particular first o-ring
- 56: second seal or second gasket, in particular second o-ring
- 58: angle
- 110: apparatus, in particular inline mixing injector apparatus (second embodiment; cf. FIG. 3 and FIG. 4)
- 112: member, in particular housing or slug, for example plastic housing or plastic slug, such as polymer housing or polymer slug
- 60: passage or passageway
- 62: region near inlet 116
- 64: region near outlet 118
- 115: central and/or longitudinal axis of member 112 and/or of passage or passageway 60
- 116: inlet
- 118: outlet
- 120: direction of flow of liquid product
- 122: channel or duct, in particular delivery channel or delivery duct
- 124: aperture of channel or duct 122 into passage or passageway 60
- 126: opening of channel or duct 122 in fluid communication with nozzle 128
- 128: nozzle
- 130: collar
- 132: processing line or product line, in particular liquid product line or steel product line
- 133: frame
- 134: first bracket
- 136: second bracket
- 138: first bolt
- 140: second bolt
- 142: first mechanical fastener, in particular wingnut or butterfly nut
- 144: second mechanical fastener, in particular nut
- 146: washer
- 148: first flange, in particular first tri-clamp flange
- 150: second flange, in particular second tri-clamp flange
- 152: band or strap, in particular metal band or metal strap
- 154: first seal or first gasket, in particular first o-ring
- 156: second seal or second gasket, in particular second o-ring
- 158: angle
- 210: apparatus, in particular inline mixing injector apparatus (third embodiment; cf. FIG. 5 and FIG. 6)
- 212: member, in particular housing or slug, for example plastic housing or plastic slug, such as polymer housing or polymer slug
- 80: passage or passageway
- 82: region near inlet 216
- 84: region near outlet 218
- 215: central and/or longitudinal axis of member 212 and/or of passage or passageway 80
- 216: inlet
- 218: outlet
- 220: direction of flow of liquid product
- 222: channel or duct, in particular delivery channel or delivery duct
- 224: aperture of channel or duct 222 into passage or passageway 80
- 226: opening of channel or duct 222 in fluid communication with nozzle 228
- 228: nozzle
- 230: collar
- 232: processing line or product line, in particular liquid product line or steel product line
- 233: frame
- 234: first bracket
- 236: second bracket
- 238: first bolt
- 240: second bolt
- 242: first mechanical fastener, in particular wingnut or butterfly nut
- 244: second mechanical fastener, in particular nut
- 246: washer
- 248: first flange, in particular first tri-clamp flange
- 250: second flange, in particular second tri-clamp flange
- 252: band or strap, in particular metal band or metal strap
- 254: first seal or first gasket, in particular first o-ring
- 256: second seal or second gasket, in particular second o-ring
- 258: angle

## Claims

1. An apparatus (10; 110; 210) for reducing the temperature of a liquid product in a processing line (32; 132; 232), said liquid product in particular comprising a flowable food product, for example an edible substance selected from the group consisting of sauces, marinades, soups, dairy and other heated or pasteurized products, said apparatus (10; 110; 210) comprising:
- a housing or member (12; 112; 212) having a passageway (14; 114; 214) formed therein for receiving the liquid product in the passageway (14; 114; 214);
- an inlet (16; 116; 216) and an outlet (18; 118; 218) each in fluid communication with a corresponding opposed end of the passageway (14; 114; 214);
- a plurality of delivery channels (22; 122; 222) formed in the housing or member (12; 112; 212), each one of the plurality of delivery channels (22; 122; 222) having an opening (26; 126; 226) in fluid communication with a different location of the passageway (14; 114; 214) and constructed to provide a chilling medium into the passageway (14; 114; 214); and
- a support member for the housing or member (12; 112; 212), the support member constructed to mount said housing or member (12; 112; 212) in the processing line (32; 132; 232),
**characterized in**
**that** the respective opening (26; 126; 226) of the plurality of delivery channels (22; 122; 222) comprises a staggered or helical pattern along the passageway (14; 114; 214) for delivering the chilling medium so that a plurality of streams of the chilling medium injected into the passageway (14; 114; 214) are arranged in said staggered or helical pattern along the passageway (14; 114; 214) for facilitating mixing of the chilling medium with the liquid product passing through the passageway (14; 114; 214).

2. The apparatus according to claim 1, wherein the housing or member (12; 112; 212) comprises a slug, the material of said slug being selected from the group consisting of polytetrafluoroethylene (PTFE), ultra high molecular weight (UHMW) plastic, and other plastic material.

3. The apparatus according to claim 1 or 2, wherein the housing or member (12; 112; 212) comprises a slug having a circular cross-section.

4. The apparatus according to at least one of claims 1 to 3, wherein the passageway (14; 114; 214) comprises a continuous uniform diameter.

5. The apparatus according to at least one of claims 1 to 4, wherein the chilling medium comprises a cryogenic substance selected from the group consisting of liquid nitrogen, gaseous nitrogen, a combination of liquid nitrogen and gaseous nitrogen, liquid carbon dioxide, gaseous carbon dioxide, and a combination of liquid carbon dioxide and gaseous carbon dioxide.

6. The apparatus according to at least one of claims 1 to 5, wherein each of the plurality of delivery channels (22; 122; 222) are disposed at an angle (58; 158; 258) less than ninety degrees with respect to a longitudinal axis (15; 115; 215) of the passageway (14; 114; 214), said angle (58; 158; 258) in particular approaching a direction of flow of the chilling medium in the passageway (14; 114; 214).

7. The apparatus according to at least one of claims 1 to 6, further comprising at least one nozzle (28; 128; 228) in fluid communication with an aperture (24; 124; 224) of each of the plurality of delivery channels (22; 122; 222) opposite to the opening (26; 126; 226), said nozzle (28; 128; 228) in particular being in fluid communication with a plurality of the apertures (24; 124; 224) of the delivery channels (22; 122; 222).

8. The apparatus according to at least one of claims 1 to 7, wherein the support member comprises a frame (33; 133; 233), said frame (33; 133; 233)
- in particular constructed from metallic components, and/or
- in particular being releasably engageable to the housing or member (12; 112; 212).

9. The apparatus according to at least one of claims 1 to 8, wherein a diameter of the passageway (14; 114; 214) increases from said inlet (16; 116; 216) to said outlet (18; 118; 218).

10. A method for reducing the temperature of a liquid product in a processing line (32; 132; 232), said method comprising:
- introducing the liquid product through a passageway (14; 114; 214) of a housing or member (12; 112; 212) for chilling said liquid product in said passageway (14; 114; 214);
- providing into the passageway (14; 114; 214) a plurality of streams of a chilling medium at different locations of the passageway (14; 114; 214) wherein the plurality of streams of the chilling medium is injected into the passageway (14; 114; 214) along a staggered or helical path in the passageway (14; 114; 214) for facilitating mixing of the chilling medium into the liquid product passing through the passageway (14; 114; 214); and
- mounting the housing or member (12; 112; 212) in the processing line (32; 132; 232).

11. The method according to claim 10, wherein the chilling medium comprises a cryogenic substance selected from the group consisting of liquid nitrogen, gaseous nitrogen, a combination of liquid nitrogen and gaseous nitrogen, liquid carbon dioxide, gaseous carbon dioxide, and a combination of liquid carbon dioxide and gaseous carbon dioxide.

12. The method according claim 10 or 11, wherein the providing the plurality of streams comprises pressurizing said providing.

13. The method according to at least one of claims 10 to 12, wherein the liquid product comprises a flowable food product, in particular an edible substance selected from the group consisting of sauces, marinades, soups, dairy and other heated or pasteurized products.

14. The method according to at least one of claims 10 to 13, wherein the mounting comprises removably mounting the housing or member (12; 112; 212) in the processing line (32; 132; 232).

15. The method according to at least one of claims 10 to 14, wherein the liquid product makes a single pass through the passageway (14; 114; 214).

## Patentansprüche

1. Vorrichtung (10; 110; 210) zur Verringerung der Temperatur eines flüssigen Produkts in einer Verarbeitungsstraße (32; 132; 232), wobei das flüssige Produkt insbesondere ein fließfähiges Nahrungsmittelprodukt umfasst, beispielsweise eine essbare Substanz ausgewählt aus der Gruppe bestehend aus Saucen, Marinaden, Suppen, Milchprodukten und anderen erwärmten oder pasteurisierten Produkten, wobei die Vorrichtung (10; 110; 210) umfasst:
- ein Gehäuse oder Element (12; 112; 212) mit einem darin gebildeten Durchgang (14; 114; 214), um das flüssige Produkt in dem Durchgang (14; 114; 214) aufzunehmen;
- einen Einlass (16; 116; 216) und einen Auslass (18; 118; 218), die jeweils in Fluidkommunikation mit einem entsprechenden entgegengesetzten Ende des Durchgangs (14; 114; 214) sind;
- eine Vielzahl von Abgabekanälen (22; 122; 222), die in dem Gehäuse oder Element (12; 112; 212) gebildet sind, wobei jeder von der Vielzahl der Abgabekanäle (22; 122; 222) eine Öffnung (26; 126; 226) in Fluidkommunikation mit einer anderen Stelle des Durchgangs (14; 114; 214) aufweist und aufgebaut ist, um ein Kühlmedium in den Durchgang (14; 114; 214) hinein bereitzustellen; und
- ein Trägerelement für das Gehäuse oder Element (12; 112; 212), wobei das Trägerelement aufgebaut ist, um das Gehäuse oder Element (12; 112; 212) in der Verarbeitungsstraße (32; 132; 232) zu montieren,
**dadurch gekennzeichnet, dass**
die jeweilige Öffnung (26; 126; 226) von der Vielzahl von Abgabekanälen (22; 122; 222) ein gestuftes oder spiraliges Muster entlang des Durchgangs (14; 114; 214) umfasst, um das Kühlmedium abzugeben, so dass eine Vielzahl von Strömen des Kühlmediums, welches in den Durchgang (14; 114; 214) injiziert wird, in dem gestuften oder spiraligen Muster entlang des Durchgangs (14; 114; 214) angeordnet ist, um das Mischen des Kühlmediums mit dem flüssigen Produkt zu erleichtern, welches den Durchgang (14; 114; 214) passiert.

2. Vorrichtung nach Anspruch 1, wobei das Gehäuse oder Element (12; 112; 212) einen Stutzen umfasst, wobei das Material des Stutzens ausgewählt ist aus der Gruppe bestehend aus Polytetrafluorethylen (PTFE), Kunststoff mit ultrahohem Molekulargewicht (UHMW) und anderem Kunststoffmaterial.

3. Vorrichtung nach Anspruch 1 oder 2, wobei das Gehäuse oder Element (12; 112; 212) einen Stutzen mit einem runden Querschnitt umfasst.

4. Vorrichtung nach mindestens einem der Ansprüche 1 bis 3, wobei der Durchgang (14; 114; 214) einen kontinuierlichen gleichförmigen Durchmesser umfasst.

5. Vorrichtung nach mindestens einem der Ansprüche 1 bis 4, wobei das Kühlmedium eine kryogene Substanz ausgewählt aus der Gruppe bestehend aus flüssigem Stickstoff, gasförmigem Stickstoff, einer Kombination aus flüssigem Stickstoff und gasförmigem Stickstoff, flüssigem Kohlendioxid, gasförmigem Kohlendioxid sowie einer Kombination aus flüssigem Kohlendioxid und gasförmigem Kohlendioxid umfasst.

6. Vorrichtung nach mindestens einem der Fälle 1 bis 5, wobei jeder von der Vielzahl der Abgabekanäle (22; 122; 222) in einem Winkel (58; 158; 258) von weniger als neunzig Grad in Bezug zu einer Längsachse (15; 115; 215) des Durchgangs (14; 114; 214) angeordnet ist, wobei der Winkel (58; 158; 258) sich insbesondere einer Flussrichtung des Kühlmediums in dem Durchgang (14; 114; 214) annähert.

7. Vorrichtung nach mindestens einem der Ansprüche 1 bis 6, ferner umfassend mindestens eine Düse (28; 128; 228) in Fluidkommunikation mit einer Öffnung (24; 124; 224) von jedem von der Vielzahl der Abgabekanäle (22; 122; 222) gegenüber der Öffnung (26; 126; 226), wobei die Düse (28; 128; 228) insbesondere in Fluidkommunikation mit einer Vielzahl der Öffnungen (24; 124; 224) der Abgabekanäle (22; 122; 222) ist.

8. Vorrichtung nach mindestens einem der Ansprüche 1 bis 7, wobei das Trägerelement einen Rahmen (33; 133; 233) umfasst, wobei der Rahmen (33; 133; 233)
- insbesondere aus metallischen Komponenten aufgebaut ist, und/oder
- insbesondere in lösbaren Eingriff mit dem Gehäuse oder Element (12; 112; 212) bringbar ist.

9. Vorrichtung nach mindestens einem der Ansprüche 1 bis 8, wobei ein Durchmesser des Durchgangs (14; 114; 214) von dem Einlass (16; 116; 216) zu dem Auslass (18; 118; 218) zunimmt.

10. Verfahren zur Verringerung der Temperatur eines flüssigen Produkts in einer Verarbeitungsstraße (32; 132; 232), wobei das Verfahren umfasst:
- Einbringen des flüssigen Produkts durch einen Durchgang (14; 114; 214) eines Gehäuses oder Elements (12; 112; 212) hindurch, um das flüssige Produkt in dem Durchgang (14; 114; 214) zu kühlen;
- Bereitstellen einer Vielzahl von Strömen eines Kühlmediums an unterschiedlichen Stellen des Durchgangs (14; 114; 214) in dem Durchgang (14; 114; 214), wobei die Vielzahl von Strömen des Kühlmediums entlang eines gestuften oder spiraligen Wegs in dem Durchgang (14; 114; 214) in den Durchgang (14; 114; 214) injiziert wird, um Mischen des Kühlmediums in das flüssige Produkt zu erleichtern, welches den Durchgang (14; 114; 214) passiert; und
- Montieren des Gehäuses oder Elements (12; 112; 212) in der Verarbeitungsstraße (32; 132; 232).

11. Verfahren nach Anspruch 10, wobei das Kühlmedium eine kryogene Substanz ausgewählt aus der Gruppe bestehend aus flüssigem Stickstoff, gasförmigem Stickstoff, einer Kombination aus flüssigem Stickstoff und gasförmigem Stickstoff, flüssigem Kohlendioxid, gasförmigem Kohlendioxid sowie einer Kombination aus flüssigem Kohlendioxid und gasförmigem Kohlendioxid umfasst.

12. Verfahren nach Anspruch 10 oder 11, wobei das Bereitstellen der Vielzahl von Strömen Druckbeaufschlagen des Bereitstellens umfasst.

13. Verfahren nach mindestens einem der Ansprüche 10 bis 12, wobei das flüssige Produkt ein fließfähiges Nahrungsmittelprodukt umfasst, insbesondere eine essbare Substanz ausgewählt aus der Gruppe bestehend aus Saucen, Marinaden, Suppen, Milchprodukten und anderen erwärmten oder pasteurisierten Produkten.

14. Verfahren nach mindestens einem der Ansprüche 10 bis 13, wobei das Montieren entfernbares Montieren des Gehäuses oder Elements (12; 112; 212) in der Verarbeitungsstraße (32; 132; 232) umfasst.

15. Verfahren nach mindestens einem der Ansprüche 10 bis 14, wobei das flüssige Produkt den Durchgang (14; 114; 214) ein einziges Mal durchläuft.

## Revendications

1. Appareil (10 ; 110 ; 210) qui permet de réduire la température d'un produit liquide dans une ligne de traitement (32 ; 132 ; 232), ledit produit liquide comprenant en particulier un produit alimentaire fluide, par exemple une substance comestible choisie dans le groupe constitué par les sauces, les marinades, des soupes, des produits laitiers et d'autres produits chauffés ou pasteurisés, ledit appareil (10 ; 110 ; 210) comprenant :
- un boîtier ou un élément (12 ; 112 ; 212) ayant un passage (14 ; 114 ; 214) formé à l'intérieur de celui-ci pour recevoir le produit liquide dans le passage (14 ; 114 ; 214) ;
- un orifice d'entrée (16 ; 116 ; 216) et un orifice de sortie (18 ; 118 ; 218), chacun en communication fluidique avec une extrémité opposée correspondante du passage (14 ; 114 ; 214) ;
une pluralité de canaux de distribution (22 ; 122 ; 222) formés dans le boîtier ou l'élément (12 ; 112 ; 212), chacun des canaux de distribution de la pluralité de canaux de distribution (22 ; 122 ; 222) ayant une ouverture (26 ; 126 ; 226) en communication fluidique avec un emplacement différent du passage (14 ; 114 ; 214) et construite pour fournir un milieu de refroidissement dans le passage (14 ; 114 ; 214) ; et
- un élément de support pour le boîtier ou l'élément (12 ; 112 ; 212), l'élément de support étant construit pour monter ledit boîtier ou ledit élément (12 ; 112 ; 212) dans la ligne de traitement (32 ; 132 ; 232),
**caractérisé en ce que** l'ouverture respective (26 ; 126 ; 226) de la pluralité de canaux de distribution (22 ; 122 ; 222) comprend un motif décalé ou hélicoïdal le long du passage (14 ; 114 ; 214) pour distribuer le milieu de refroidissement de telle sorte qu'une pluralité de flux du milieu de refroidissement injectés dans le passage (14 ; 114 ; 214) sont agencés dans ledit motif décalé ou hélicoïdal le long du passage (14 ; 114 ; 214) pour faciliter le mélange du milieu de refroidissement avec le produit liquide passant à travers le passage (14 ; 114 ; 214).

2. Appareil selon la revendication 1, le boîtier ou l'élément (12 ; 112 ; 212) comprenant un bouchon, le matériau dudit bouchon étant choisi dans le groupe constitué par le polytétrafluoroéthylène (PTFE)), une matière plastique à poids moléculaire ultra élevé (UHMW) et d'autres matières plastiques.

3. Appareil selon la revendication 1 ou 2, le boîtier ou l'élément (12 ; 112 ; 212) comprenant un bouchon ayant une section transversale circulaire.

4. Appareil selon l'une au moins des revendications 1 à 3, le passage (14 ; 114 ; 214) comprenant un diamètre uniforme continu.

5. Appareil selon l'une au moins des revendications 1 à 4, le milieu de refroidissement comprenant une substance cryogénique choisie dans le groupe constitué par l'azote liquide, l'azote gazeux, une combinaison d'azote liquide et d'azote gazeux, du dioxyde de carbone liquide, du dioxyde de carbone gazeux, et une combinaison de dioxyde de carbone liquide et de dioxyde de carbone gazeux.

6. Appareil selon l'une au moins des revendications 1 à 5, chaque canal de la pluralité de canaux de distribution (22 ; 122 ; 222) étant disposé selon un angle (58 ; 158 ; 258) inférieur à quatre-vingt-dix degrés par rapport à un axe longitudinal (15 ; 115 ; 215) de la voie de passage (14 ; 114 ; 214), ledit angle (58 ; 158 ; 258) s'approchant en particulier d'une direction d'écoulement du milieu de refroidissement dans le passage (14 ; 114 ; 214).

7. Appareil selon l'une au moins des revendications 1 à 6, comprenant en outre au moins une buse (28 ; 128 ; 228) en communication fluidique avec une ouverture (24 ; 124 ; 224) de chacun de la pluralité de canaux de distribution (22 ; 122 ; 222) opposée à l'ouverture (26; 126 ; 226), ladite buse (28 ; 128 ; 228) étant en particulier en communication fluidique avec une pluralité d'ouvertures (24 ; 124 ; 224) des canaux de distribution (22 ; 122 ; 222).

8. Appareil selon l'une au moins des revendications 1 à 7, l'élément de support comprenant un cadre (33 ; 133 ; 233), ledit cadre (33 ; 133 ; 233)
- étant construit en particulier à partir de composants métalliques et/ou
- pouvant en particulier être mis en prise de manière libérable avec le boîtier ou l'élément (12 ; 112 ; 212).

9. Appareil selon l'une au moins des revendications 1 à 8, un diamètre du passage (14 ; 114 ; 214) augmentant de ladite entrée (16 ; 116 ; 216) à ladite sortie (18 ; 118 ; 218).

10. Procédé de réduction de la température d'un produit liquide dans une ligne de traitement (32 ; 132 ; 232), ledit procédé comprenant :
- l'introduction du produit liquide à travers un passage (14 ; 114 ; 214) d'un boîtier ou d'un élément (12 ; 112 ; 212) pour refroidir ledit produit liquide dans ledit passage (14 ; 114 ; 214) ;
- l'introduction dans le passage (14 ; 114 ; 214) d'une pluralité de flux d'un milieu de refroidissement à différents emplacements du passage (14 ; 114 ; 214) la pluralité de flux du milieu de refroidissement étant injectés dans le passage (14 ; 114 ; 214) le long d'un trajet décalé ou hélicoïdal dans le passage (14 ; 114 ; 214) pour faciliter le mélange du milieu de refroidissement dans le produit liquide passant à travers le passage (14 ; 114 ; 214) ; et
- le montage du boîtier ou de l'élément (12 ; 112 ; 212) dans la ligne de traitement (32 ; 132 ; 232).

11. Procédé selon la revendication 10, le milieu de refroidissement comprenant une substance cryogénique choisie dans le groupe constitué par l'azote liquide, l'azote gazeux, une combinaison d'azote liquide et d'azote gazeux, du dioxyde de carbone liquide, du dioxyde de carbone gazeux, et une combinaison de dioxyde de carbone liquide et de dioxyde de carbone gazeux.

12. Procédé selon la revendication 10 ou 11, la fourniture de la pluralité de flux comprenant la mise sous pression de ladite fourniture.

13. Procédé selon l'une au moins des revendications 10 à 12, le produit liquide comprenant un produit alimentaire fluide, en particulier une substance comestible choisie dans le groupe constitué par les sauces, les marinades, les soupes, les produits laitiers et autres produits chauffés ou pasteurisés.

14. Procédé selon l'une au moins des revendications 10 à 13, le montage comprenant le montage amovible du boîtier ou de l'élément (12 ; 112 ; 212) dans la ligne de traitement (32 ; 132 ; 232).

15. Procédé selon l'une au moins des revendications 10 à 14, le produit liquide faisant un seul passage à travers le passage (14 ; 114 ; 214).
